# EUROPEAN PATENT APPLICATION

(11) **EP 2 881 440 A1**
(43) Date of publication of application: **10.06.2015**
(21) Application number: 13196140.1
(22) Date of filing: 09.12.2013
(51) Int. Cl.: C09D 1/00

(54) **Double-layer coating on alloy steel**

(71) Applicant: Rigas Tehniska universitate, Riga 1658 (LV)
(72) Inventor: Mezinskis, Gundars, 2137 Garkalne (LV); Pavlovska, Ilona, 1067 Riga (LV); Bidermanis, Laimons, 1057 Riga (LV); Malnieks, Kaspars, 5016 Rembate (LV)
(74) Representative: Fortuna, Jevgenijs

(57) **Abstract**

The invention relates to the enamelling industry, in particular - to chromium-nickel steel alloy-based double-layer coatings for accumulation of solar radiation. Accumulation of solar radiation to some extent depends on the accumulative surface roughness, because it determines the size of radiation accumulation area. Increased surface area is achieved by applying a double-layer coating. The first layer is a black enamel coating that provides adhesion to the metal substrate. The second layer - fine oxide mixture applied on enamel coating using sol-gel technology, where said second layer provides additional roughness. The required dispersity is provided by sol-gel TiO₂ - SiO₂ coating, where the components are in the following amounts, in percentage by weight: TiO₂ - 20, SiO₂ - 80.

## Description

### Technical Field

The invention relates to the enamelling industry, in particular - to the mass composition for obtaining solar radiation low-reflectance silicate enamel coating on high alloy chromium nickel steel.

### Background Art

Solar radiation accumulation to some extent depends on the accumulative surface roughness, because it determines the radiation accumulation area. It is known that accumulation of solar radiation can be increased by reducing the reflection of the radiation by means of increasing the surface area using a double-layer coating. Traditionally, the first layer is a black enamel coating that provides adhesion to the metal substrate and the second layer - 1 to 3 layers of fine oxide coating on the enamel coating applied by using the sol-gel technology [1, 2]. The second layer provides additional roughness.

There is known black enamel coating on chromium-nickel steel alloy, which could be used as a bonding layer to the metal [3], however said enamel coating does not withstand sustained high temperature impact (e.g. 600°C for 3000 h).

The patent [4] discloses the composition of the enamel coating being suitable as enamel coating, which contains (parts by weight): frit 53A - 100, pigment - 20, crystallizer - 30. The crystallizer is a mixture of 100 parts by weight of ground sand and 3 parts by weight of sodium (anhydrous), heated for 1-2 hours at temperature 1000-1200°C and then ground. Pigment is a compound of corundum-type (Cr, Fe)₂O₃ structure having the following characteristics: density - 4,9±0.6 g/cm³; granulometry - particle size: 45-55% of particles with a diameter of 3±0.6 µm, and at least 95% of the particles diameter is not more than 26 µm. The frit 53A has the following chemical composition, % by weight: SiO₂ - 78; Na₂O - 8; K₂O - 2; Li₂O - 4; B₂O₃ - 2; Al₂O₃ - 1; ZrO₂ - 1; Cr₂O₃ - 1; MnO - 1; Fe₂O₃ - 1; CuO - 1 [5].

The process of obtaining enamel coating is as follows: enamel frit is melted at temperature of 1300-1350°C, the melt is granulated in water. The enamel coating components (frit, pigment, crystallizer) according to prescription are weighed by adding (weight percent of frit weight): clay 0-5; bentonite 0-1.5; NaNO₂ 0.4-0.6; Cr₂O₃ 0-0.6; then mixed and a slip is prepared, by adding water. The slip is applied on the product by a dip-coating method, pouring-over, or by spray method, each layer is dried and fired at 950 °C temperature. Enamel coating contains from 1 to 3 layers. After the last layer is melted, for 20 - 30 minutes, the product is cooled together with a furnace.

Although the coating mentioned in the patent [4] withstands sustained high temperature impact (600 °C for 3000 h), enamel coating surface roughness is insufficient, because the degree of the surface roughness determines the size of the radiation accumulation area [6-9].

### Disclosure of the Invention

The aim of the invention is to attain the increase the surface roughness of the enamel coating applied on the chromium-nickel steel alloy.

The set task is achieved by applying two layer coating on chromium-nickel steel alloy, where the first layer contains enamel frit, pigment and crystallizer, and the second layer contains from 1 to 3 layers of oxides in fine dispersed form applied by sol-gel technology, in percent by weight: TiO₂ - 20, SiO₂ - 80. The coating is strengthened by firing the product.

The first layer of the proposed chromium-nickel steel alloy coating contains enamel frit, pigment and crystallizer containing the following components in parts by weight: frit 53A - 100 parts by weight, pigments - 20 parts by weight, and crystallizer - 30 parts by weight. The crystallizer may consist of: 100 parts by weight ground sand and 3 parts by weight sodium (anhydrous) mixture, which is calcined for 1-2 hours at 1000-1200 °C and grounded. Pigment may be compound of corundum-type (Cr, Fe)₂O₃ structure having the following characteristics: density 4.9±0.6 g/cm³; granulometry - particle size: 45-55% of particles with a diameter of 3±0.6 µm, and at least 95% of the particles diameter is not more than 26 µm. Frit 53A has the following chemical composition, % by weight: SiO₂ - 78, Na₂O - 8, K₂O - 2, Li₂O - 4, B₂O₃ - 2, Al₂O₃ - 1, ZrO₂ - 1, Cr₂O₃ - 1, MnO - 1, Fe₂O₃ - 1, CuO - 1.

The process for obtaining the proposed enamel coating is as follows: enamel frit is melted at 1300-1350°C temperature, the melt is granulated in water. The enamel coating components (frit, pigment, and crystallizer) according to prescription are weighed by adding (weight percent of frit weight): clay 0 - 5, bentonite - 0 -1.5, NaNO₂ 0.4-0.6, Cr₂O₃ 0-0.6, then mixed and a slip is prepared, by adding water. The slip on the product is applied by a dip-coating method, pouring-over, or by spraying method, each layer is dried and fired at 950 °C temperature.

For the preparation of the proposed fine dispersed oxide mixture obtained by the sol-gel technology [1, 2] the silicon- and titanium alkoxides (tetraethyl-ortho-silane (TEOS) and tetrapropil-ortho-titanate) with the components SiO₂/TiO₂ weight ratio 1:4 is used. Alcohol is added to the total content of alcoxides in the molar ratio of 1:10 as well as 4 moles of acetic acid per one mole of titanium alkoxide. Each sol-gel layer (1-3) is applied by a dip-coating method with a dipping/withdrawal speeds of 0.45 cm/s and dried at room temperature for 10 min and after applying the last layer the coating is strengthened by firing the product (1 h at 500 °C temperature).

The properties of the resulting coating and coating according to the prior art solution are indicated in the Table 1.

**Table 1**

| Properties of the coatings (atomic force microscope Veeco SPM II data were analysed with the instrument-equipped software IP2 from scanning area 50x50 µm²) | | |
|---|---|---|
| | The coating roughness, nm | |
| | Enamel coating according to LV14504 | The proposed double-layer coating |
| Before the heat treatment | 6488 | 6497 |
| After the heat treatment (600 °C 3000 h) | 6629 | 7949 |

As it can be seen from the Table 1, the proposed double-layer coating, compared with the coating set forth in LV14504, assures the surface roughness of the proposed coating.

### Sources of Information:

1. C.J.Brinker, G.W.Sherer. Sol-gel science: the physis and chemistry of sol-gel processing. Academic Press. 1990. 908 p.
2. S.M.Attia, Jue Wang, Guangming Wu, Jun Shen, Jianhua Ma. Review on Sol-Gel Derived Coatings: Process, Tehniques and Optial Applications. J. Mater. Sci. Technol., Vol. 18., No.3, 2002.
3. Patent LV14401B Int.C1.C03C 8/00, C23D 5/00. Masa emalju tipa parklajumam uz te̅rauda (autori: L.Bi̅dermanis. J.Liep 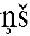 s, G.Me 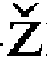 inskis, A.Cimmers, I.Pavlovska.
4. Patent LV14504B Int.Cl C03C 8/00, C2390 1/00. Masa stikla-krista̅liskas emaljas pa̅rkla̅jumam uz te̅rauda (autori: J.Liepi 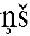 , L.Bi̅dermanis, G.Me 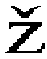 inskis, I.Pavlovska, A.Cimmers, L.Lindina).
5. SU author's certificate No. 391082, Int.Cl. MKL CO3C7/04, 1973. Emalja te̅raudam (autori: L.Bi̅dermanis, J.Eiduks, P.Pauk 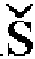 s).
6. J. Takadoum. Black coatings: a review. The European Physical Journal Applied Physics 52, 3 (2010)DOI: 10.1051/epjap/2010155
7. C.E. Kennedy.Review of Mid- to High-Temperature Solar Selective Absorber Materials. http://large.stanford.edu/publications/coal/references/troughnet/solarfield/docs/31267.p df
8. C.E Barrera, L. Salgado, U. Morales, I. Gonzalez. Solar absorptance of black cobalt and black cobalt-silver films and its relation with roughness coefficient. Renewable Energy 24 (2001) 357-364.
9. F. Mammadov. International Journal of Energy Engineering 2012, 2(4): 138-144. DOI: 10.5923/j.ijee.20120204.05

## Claims

1. A double-layer coating on a chromium-nickel steel alloy for the accumulation of solar radiation, where the first layer of the coating contains enamel frit, pigment and crystallizer, **characterized in that** the second layer contains the following fine dispersed components, in percentage by weight: TiO₂ - 20, SiO₂ - 80.

2. The coating according to claim 1, **characterized in that** the fine dispersed components are applied by a sol-gel technology.
